# EUROPEAN PATENT SPECIFICATION

(11) **EP 3 143 475 B1**
(45) Date of publication and mention of the grant of the patent: **07.07.2021**
(21) Application number: 15727565.2
(22) Date of filing: 08.05.2015
(51) Int. Cl.: G06F 1/26

(54) **FUNCTIONAL CHECK OF POWER SUPPLY UNITS**
FUNKTIONSPRÜFUNG VON STROMVERSORGUNGSEINHEITEN
VÉRIFICATION FONCTIONNELLE D'UNITÉS D'ALIMENTATION ÉLECTRIQUE

(30) Priority: 12.05.2014 GB 201408374
(43) Date of publication of application: 22.03.2017
(73) Proprietor: Eaton Intelligent Power Limited, 4 Dublin (IE)
(72) Inventor: KIA, Emilien, F-38530 Pontcharra (FR); QUETTE, Arnaud, F-38660 Saint-Bernard (FR)
(74) Representative: Eaton IP Group EMEA
(86) International application number: PCT/EP2015/060193
(87) International publication number: WO 2015/173141

(56) References cited:
- US-A1- 2008 314 168
- US-A1- 2009 049 337
- US-A1- 2011 307 111
- US-A1- 2012 226 464
- US-A1- 2014 097 681
- US-A1- 2014 115 353

## Description

The invention refers to a method of executing a functional check on a power supply unit of an electronic device, the electronic device comprising at least one power supply unit obtaining electric energy from at least one power source, wherein the electronic device and the at least one power source are assigned to a system, and to a datacentre management tool for managing a plurality of power sources and power consuming electronic devices of a datacentre, the electronic devices comprising at least one power supply unit for obtaining electric energy from the power sources and for supplying the respective electronic device with the electric energy, the power sources and the electronic devices being assigned to a network, wherein the datacentre management tool is adapted to execute a functional check of at least one of the power supply units.

Datacentres are widely used to house various types of electronic devices, including computer systems and the physical infrastructure needed to support such systems, such as power supplies, including uninterruptible power supplies, backup power supplies and power distribution units. Companies that depend on the proper and efficient operation of their datacentres use various tools to monitor and operate the physical infrastructure, for example to report critical infrastructure events. One critical event would be the failure of a power supply unit. Electronic devices like server systems regularly comprise more than one power supply unit, on the one hand to satisfy the maximum power consumption of the device and/or to provide a failsafe energy supply, as the electronic device will not drop out, if one of a plurality of power supply units is faulty. It is a disadvantage, however, that the failure of one power supply unit regularly remains undetected by an operator in the datacentre. Functional checks of power supply units are usually carried out manually by datacentre personnel. In US 7 216 241 B2, a self-test feature for power supply units is proposed, but still, the functional check has to be carried out manually at the device.

US2009049337 relates to the field of power supplies of electronic devices, and more particularly to a system and method for testing redundancy and hot-swapping capability of a redundant power supply.

An objective of the invention is to provide a method of executing a remotely controlled functional check on a power supply unit of an electronic device.

This objective is achieved by the method according to claim 1. In the dependent claims, preferred embodiments are described. A further claimed object refers to a datacentre management tool utilizing the method according to the invention.

The method according to the invention is provided for the execution of a functional check on a power supply unit of an electronic device, which electronic device comprises at least one such power supply unit. The method is applicable on electronic devices with only one power supply unit. Preferably, the electronic device possesses a plurality of power supply units. The power supply units obtain electric energy from at least one power source, which may particularly be one or more of a power distribution unit, an uninterruptible power supply and a backup power supply. According to the invention, the electronic device and any of the power sources are assigned to a system, the system preferably providing one or more connections to allow communication between elements assigned to the system, in particular to the electric devices and to the power sources. The connections preferably comprise a network. More preferably, a plurality of independent connections is provided, like for example, first connections being provided by an Ethernet network, and second connections being direct point-to-point connections. The connections of the system are preferably provided for the control of a datacentre. The electronic device may thus be any device having at least one power supply unit, such as, but not limited to a server, a storage device, a network switch or a router.

According to the invention, the following method steps are executed by sending and/or receiving signals over the system:
(a) establishing a switching status, wherein only the power supply unit to be checked obtains electric energy from the at least one power source, and
(b) enquiring whether the electronic device is responsive or not while the switching status according to step (a) persists.

By controlling the power sources in the system, in particular via a communication connection or a plurality of communication connections provided by the system, it is advantageously achieved, that only one isolated power supply unit of the electronic device works. Thus, if the electronic device responds to a request, the power supply unit must be operable. If the electronic device is not responsive, however, it may beneficially be assumed that this specific power supply unit is defective. The method according to the invention advantageously allows to check any power supply unit of an electronic device or of a plurality of electronic devices from a remote computer station for the datacentre management, which is assigned to the system as well. The check may be executed manually or automated.

Preferably, the switching status according to step (a) is established by switching off any one of a plurality of outlets of the one or more power sources, which provide electric energy to the electronic device, with the exception that the one outlet connected to the power supply unit to be checked is switched on or is kept switched on.

A step of analyzing an infrastructure of the system is preferably executed, particularly by accessing data files of a datacentre management comprising this information. In a datacentre, a fraction of the datacentre devices and power sources can be assigned to the system in the sense of the invention, or the complete datacentre with its devices, power sources and communication connections constitutes the system. The person skilled in the art will be aware, however, that the method according to the invention will usually not be applied to a complete datacentre, but preferably to a number of devices, which are currently inactive. The information on the infrastructure of the datacentre is advantageously used to identify the energy supply connections between the power sources and the electronic devices, particularly the allocation of the power source outlets to the power supply units of the electronic devices.

An initial step is preferably executed prior to establishing the switching status according to step (a), wherein any one of the plurality of outlets of the one or more power sources, which provide electric energy to the electronic device, is switched on. The initial step advantageously provides a defined initial state of the switchable outlets to start from.

According to a preferred embodiment, step (b) further includes to control the electronic device such, that a power consumption of the electronic device increases. Thus, more preferably, a robustness of the power supply unit is checked for a range of the power consumption of the electronic device. According to a further preferred embodiment, step (b) further includes to check the power supply unit by means of an integrity tester for performing an analysis of an operational stability of the power supply unit. The integrity tester preferably comprises a test equipment and/or an application for performing a more detailed or profound analysis of the condition of the power supply unit. For example, a first test is applied to check whether the power supply unit is working or not, in the sense of a binary test. If the power supply unit is working, the integrity tester advances into a second stage, analyzing the condition of the power supply unit, in the sense of checking how well does it work. This second stage preferably comprises repetitive testing of the same power supply unit to ensure stability of its operation.

Alternatively or additionally, the second stage preferably comprises a monitoring of the power feed and/or of the power consumption during step (b), which is in particularly performed directly on the power supply unit through an Intelligent Platform Management Interface (IPMI), which is known in the art as a standardized computer system interface used by system administrators for out-of-band management of computer systems and monitoring of their operation. Out-of-band management, which is also called lights-out management or LOM involves the use of a dedicated management channel for device maintenance. It allows a system administrator to monitor and manage the electronic devices of a datacentre, which may advantageously be used together with the present invention. The monitoring of the power feed and/or of the power consumption during step (b), is alternatively or additionally performed on the power distribution unit outlet, which is linked to the power supply unit. If an abnormal behaviour of the current flow is detected, for example chaotic steps between high consumption and low consumption of power, it may advantageously concluded that the power supply unit, though it has passed the first stage binary test, will probably fail within the following hours or days.

According to a further preferred embodiment, the execution of the functional check is scheduled in such a way, that an interference with a major task of the electronic device (1) is avoided. For example, the electronic device is in a maintenance state when steps (a) and (b) are executed, i.e. the electronic device is not a system currently supporting production operations. Thus, advantageously, an operational service of the datacentre may be resumed without disturbance.

According to a further preferred embodiment, a plurality of power supply units of the electronic device are checked subsequently, by repeating the steps (a) and (b) for each power supply unit. More preferably, all the power supply units of the electronic device are checked subsequently. The switching status according to step (a) is established for each of a plurality of subsequent power supply units of the electronic device, which may be effected by switching off the one outlet connected to the previously checked power supply unit and switching on the one outlet connected to the next power supply unit to be checked. It is, however, more preferable, to execute an initial step, wherein any one of a plurality of outlets of the one or more power sources, which provide electric energy to the electronic device, is switched on, the initial step being executed prior to each execution of step (a), in order to provide an advantageously defined initial state of the switchable outlets to start from.

The outlets of a power source are not necessarily all connected to power supply units of only one electronic device. A plurality of different electronic devices may be supplied by one power source. In such cases, the switchable outlets are advantageously controlled in such a way that only those outlets are switched, which are actually connected to that electronic device, wherein the power supply units are checked.

Another object of the invention is a datacentre management tool for managing a plurality of power sources for power consuming electronic devices of a datacentre, the electronic devices comprising at least one power supply unit for obtaining electric energy from the power sources and for supplying the respective electronic device with the electric energy, the power sources and the electronic devices being assigned to a system, wherein the datacentre management tool is adapted to execute a functional check of at least one of the power supply units using the method as described before. The system preferably comprises one or more connections to allow communication between elements assigned to the system, in particular from the management tool to the electronic devices and to the power sources. The connections preferably comprise a network. More preferably, a plurality of independent connections is provided, like for example, first connections being provided by an Ethernet network, and second connections being direct point-to-point connections.

Preferably, the datacentre management tool comprises a software, which is storable on a data storage medium. The software is particularly intended for running an application on an electronic device assigned to the system. Furthermore preferred, the datacentre management tool also comprises the electronic device, the electronic device being a computer station running the software application.

A data centre is generally defined as a location, for example, a room, that houses numerous electronic devices. Devices according to the invention are devices having at least one power supply unit, such as, but not limited to a server, a storage device, a network switch or a router, etc. In the sense of this invention, equipment that provides a power source for the devices are distinguished from the electronic devices. Power sources are, for example, power distribution units, uninterruptible power supplies and backup power supplies.

The method and the datacentre management tool according to the invention will now be described together with reference to the attached drawings. The respective description refers to only one possible example for an implementation of the invention, and does not limit the scope of the inventive idea in any way.

In the Figures
Fig. 1 shows a schematic view of an exemplary detail of a data centre wherein an embodiment of the datacentre management tool according to the invention can be implemented;
Fig. 2 a-d each show a schematic view of one of the electronic devices of the data centre according to Fig. 1 to illustrate an execution of an embodiment of the method according to the invention.
Fig. 3 shows a process chart to further illustrate an execution of an embodiment of the method according to the invention.

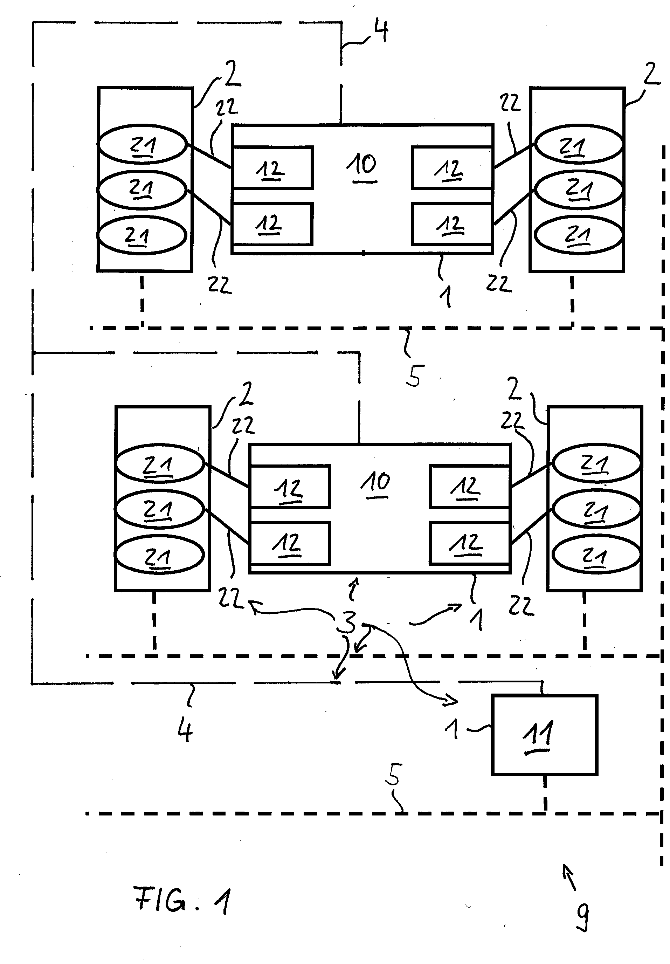

In Figure 1, a schematic view of an exemplary detail of a datacentre 9 is depicted, wherein a method according to the invention is applicable and wherein an embodiment of the datacentre management tool according to the invention is implemented. With respect to the present invention, an inventory of the datacentre 9 is distinguished into a plurality of electronic devices 1 and a plurality of power sources 2 for the electrical power supply of the electronic devices 1. The depicted electronic devices 1 comprise two server systems 10 and a datacentre management station 11. The depicted power sources 2 are arranged to supply the server systems 10 with electric energy. It is noted that more and/or different kinds of electronic devices 1 and power sources 2 are represented by the illustration of Figure 1. The electronic devices 1 and the power sources 2 are assigned to a system 3 comprising, for example, one or more connections 4, 5, which are indicated by broken lines. Of an electric supply network, only the outlets 21 of the power sources 2, and the connecting lines 22 are depicted. The connecting lines 22 are attached to respective power supply units 12 of the server systems 10. Usually, the server systems 10 comprise two or more power supply units 12.

A Datacentre management tool according to the invention is used for managing the plurality of power sources 2 supplying the power consuming electronic devices 1 of the datacentre 9. In the shown embodiment, exemplary electronic devices 1 are depicted as server systems 10, each comprising at least one power supply unit 12 for obtaining electric energy from the power sources 2 and for supplying the respective server system 10 with the electric energy. The datacentre management tool is adapted to execute a functional check of at least one of the power supply units 12 using the system 3, to which the power sources 2 and the electronic devices 1 are assigned. The datacentre management tool preferably comprises a software application running on one of the electronic devices 1 assigned to the system 3, like, for example, a computer station 11 used for datacentre management. The computer station 11 may as well be a mobile device, like a laptop, tablet PC or similar device, running the management application. The system 3 comprises first connections 4 from the computer station 11 to the electronic devices 1 and further comprises second connections 5 from the computer station 11 to the power sources 2. The first connections 4 can be provided by a network, for example, the first connections 4 are provided by an Ethernet network 4. Alternatively or additionally, the first connections 4 comprise direct point-to-point connections 4, like USB or serial. To do the functional check on the power supply units 12 of the server systems 10, communication signals are sent and/or received over the system 3 to establish such a switching status, wherein only the power supply unit 12 to be checked obtains electric energy from the power source 2, and to enquire whether the respective server system 10 is responsive or not while said switching status persists. If the server system 10 responds to a sent request over the system 3, the power supply unit 12 must be operable. If the server system 10 is shut off, however, then this specific power supply unit 12 is probably defective. Successively, all the power supply units 12 of the server systems 10 or of any other electronic devices 1 are checked from the remote computer station 11, which may be executed manually or automated. It is, however, not necessary to have personnel on-site at the respective server systems 10.

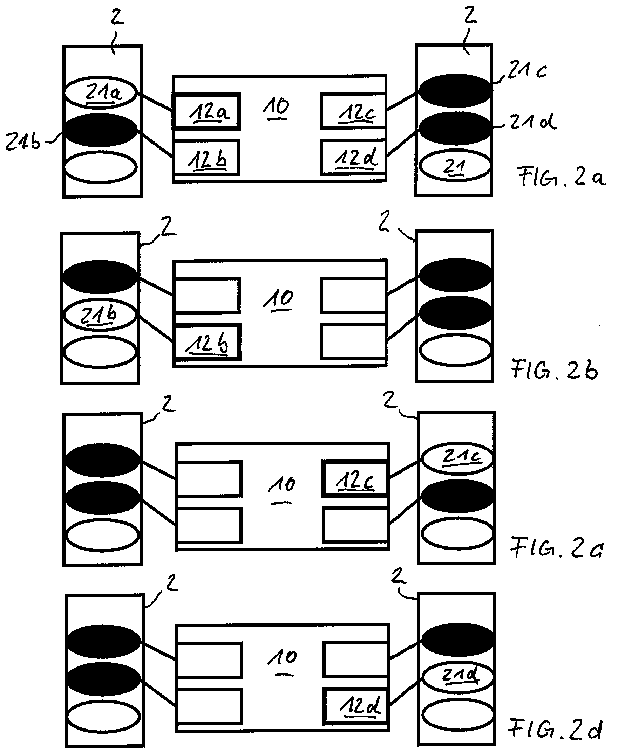

With respect to Figures 2 a-d, it is now exemplified, how the switching status for enquiring the responsiveness of a power supply unit 12 is preferably established. Figures 2 a-d show one of the server systems 10 according to Figure 1, wherein the four power supply units 12 of the server system 10 are denoted with the references 12a, 12b, 12c and 12d for accuracy of discrimination. Furthermore, those outlets 21 of the two power sources 2, which are connected by connecting lines 22 to the server system 10, are as well discriminated by the references 21a, 21b, 21c and 21d.

In Figure 2a, any one of the plurality of outlets 21a, 21b, 21c and 21d of the power sources 2 providing electric energy to the respective server system 10 is switched off, with the exception that the one outlet 21a connected to the power supply unit 12a to be checked is kept switched on. Sending a command to the power sources 2 to switch the outlets 21 on or off means, to transmit a signal via the system 3, i.e. via connections 4, 5 of the data centre 9 (cf. Fig. 1), using, for example, a specific network communication protocol. An infrastructure of the datacentre 9, including the information, which power supply unit 12 is connected to which outlet 21, must be available to the datacentre management tool. The command is preferably sent from the datacentre management station 11. Figure 2a shows the server system 10 and the power sources 2 in such a switching state, that the first power supply unit 21a can be checked as only the first power supply unit 21a is supplied with electric energy from outlet 21a. To check the responsiveness of the server system 10, any kind of access to the server system 10 is executed, like accessing a storage medium, starting an application, triggering a hardware or querying a parameter of the server system. If the server system 10 responds to the request, as mentioned before, the first power supply unit 12a must be operable and the next power supply unit 12b can be checked subsequently.

Figure 2b shows the server system 10 and the power sources 2 in such a switching state, that the second power supply unit 12b can be checked as only the second power supply unit 12b is supplied with electric energy from outlet 21b. If the server system 10 responds to the request in this switching state, it is assumed that the second power supply unit 12b must be operable and the next power supply unit 12c can be checked subsequently.

Figure 2c shows the server system 10 and the power sources 2 in such a switching state, that the third power supply unit 12c can be checked as only the third power supply unit 12c is supplied with electric energy from outlet 21c. If the server system 10 responds to the request in this switching state, it is assumed that the third power supply unit 12c must be operable and the last power supply unit 12d can be checked subsequently.

Figure 2d shows the server system 10 and the power sources 2 in such a switching state, that the fourth power supply unit 12d can be checked as only the fourth power supply unit 12d is supplied with electric energy from outlet 21d. If the server system 10 responds to the request in this switching state, it is assumed that the fourth power supply unit 12d must be operable.

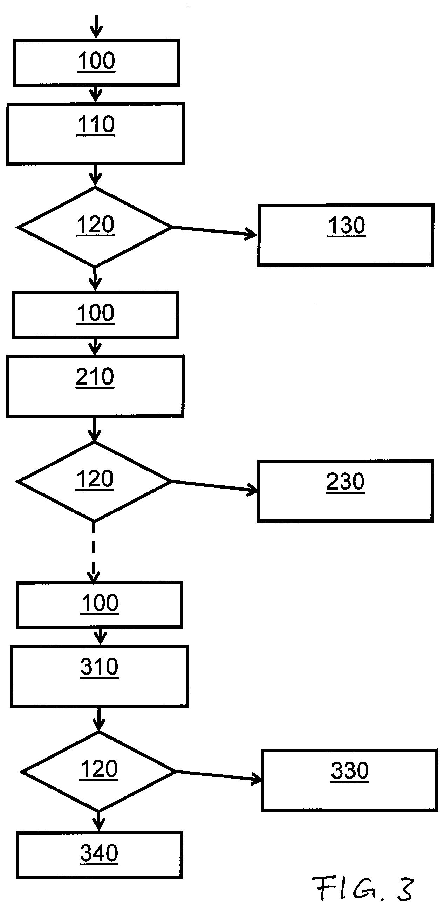

Figure 3 shows a process chart to further illustrate the steps described before with reference to Figures 2a-d in more detail for an arbitrary number of power supply units of one electronic device. In the initial step 100 all outlets connected to the power supply units are switched on. Then, in step 110, the switching status, wherein only the power supply unit to be checked obtains electric energy from the power source, is established, preferably by switching off all outlets, except the one outlet, which is connected to the first power supply unit. Subsequently, in step 120, an enquiry is executed, whether the electronic device is responsive or not while the switching status according to step 110 persists. If the electronic device is not responsive, the procedure is terminated with the conclusion in step 130 that the first power supply unit is defective.

If the electronic device responds, the procedure is resumed with a repetition of step 100, wherein all outlets connected to the power supply units are switched on. Then, in step 210, the switching status for the check is established for the next power supply unit by switching off all outlets, except the one outlet, which is connected to the next power supply unit. Subsequently, the enquiry step 120 is executed while the switching status according to step 210 persists. If the electronic device is not responsive, the procedure is terminated with the conclusion in step 230 that the next power supply unit is defective.

If the electronic device responds, again, the procedure is resumed with a repetition of steps 100, 210 and the enquiry step 120, which is indicated by the broken line arrow, until the electronic device is either not responsive, terminating the procedure with the conclusion of step 230 that the actually checked power supply unit is defective, or until the procedure is resumed with the last execution of step 100, followed by step 310, wherein the switching status for the check is established for the last power supply unit by switching off all outlets, except the one outlet, which is connected to the last power supply unit under check. Subsequently, the enquiry step 120 is executed while the switching status according to step 310 persists. If the electronic device is not responsive, the procedure is terminated with the conclusion in step 330 that the last power supply unit is defective. If the electronic device responds, the procedure is terminated with the conclusion in step 340 that all the power supply units of the electronic device are operable. The procedure may then be applied to another server system or other electronic device of the datacentre. In case, that a defective power supply unit is discovered by the datacentre management tool, the procedure may either be stopped to exchange the defective power supply, before the check is repeated, or the procedure is resumed and finally an output lists the detected defective power supply units.

### Reference numerals

- 1: Electronic device
- 2: Power source
- 3: System
- 4: First connections
- 5: Second connections
- 9: Datacentre
- 10: Server system
- 11: Computer station for datacentre management
- 12, 12a-d: Power supply unit
- 21, 21a-d: Outlet
- 22: Connection line
- 100: Initial step
- 110,210,310: Step (a)
- 120: Step (b)
- 130, 230, 330: Conclusion step, power supply unit defective
- 340: Conclusion step, all power supply units operable

## Claims

1. Method of executing a functional check on a power supply unit (12) of an electronic device (1) in a datacentre (9) comprising a plurality of electronic devices and a plurality of power sources (2) for the electrical power supply of the electronic devices, the electronic devices each comprising a plurality of power supply units obtaining electric energy from at least one of the power sources (2), wherein the electronic devices and the power sources are assigned to a system (3) providing first connections (4) from a computer station (11) for datacentre management to the electronic devices and second connections (5) from the computer station to the power sources, and wherein an infrastructure of the datacentre, including the information, which power supply unit (12) is connected to which outlet (21) of the power sources is available to a datacentre management tool by accessing data files of a datacentre management,
the method comprising the following steps:
- (a) using said information for sending signals over the second connections (5) to establish a switching status of the power sources, wherein only the power supply unit (12) to be checked obtains electric energy from the respective power source (2), wherein the switching status according to step (a) is established by switching off any one of a plurality of outlets (21) of the one or more power sources (2) providing electric energy to the electronic device (1), with the exception that the one outlet connected to the power supply unit (12) to be checked is switched on or kept switched on, and
- (b) sending and receiving signals over the first connections (4) to the electronic device comprising the power supply unit (12) to be checked to enquire whether said electronic device (1) is responsive or not while the switching status according to step (a) persists, wherein a responsive electronic device indicates an operable power supply unit (12) to be checked, and
wherein the plurality of power supply units (12) of the electronic device (1) are checked subsequently, by repeating the steps (a) and (b) for each power supply unit.

2. Method according to claim 1, wherein step (b) further includes to control the electronic device (1) such, that a power consumption of the electronic device increases.

3. Method according to claim 2, wherein a robustness of the power supply unit (12) is checked for a range of the power consumption of the electronic device (1).

4. Method according to any one of the preceding claims, wherein step (b) further includes to check the power supply unit (12) by means of an integrity tester for performing an analysis of an operational stability of the power supply unit.

5. Method according to any one of the preceding claims, wherein the execution of the functional test is scheduled in such a way, that an interference with a major task of the electronic device (1) is avoided.

6. Method according to claim 5, further comprising an initial step (100), wherein any one of plurality of outlets (21) of the one or more power sources (2), which provide electric energy to the electronic device (1), is switched on, the initial step (100) being executed prior to each execution (110, 210, 310) of step (a).

7. Datacentre management tool for managing a plurality of power sources (2) for power consuming electronic devices (1) of a datacentre (9), each electronic device comprising at least one power supply unit (12) for obtaining electric energy from the power sources and for supplying the electronic device with the electric energy, the power sources and the electronic devices being assigned to a system (3), wherein the datacentre management tool is adapted to execute a functional check of at least one of the power supply unit (12) using the method according to one of the preceding claims.

8. Datacentre management tool according to claim 7, wherein the datacentre management tool comprises a software application running on an electronic device (1) assigned to the system (3).

9. Datacentre management tool according to claim 8, wherein the datacentre management tool comprises the electronic device (1), the electronic device being a computer station (11) running the software application.

## Patentansprüche

1. Verfahren zum Ausführen einer Funktionsprüfung an einer Leistungsversorgungseinheit (12) einer elektronischen Vorrichtung (1) in einem Datenzentrum (9), umfassend eine Vielzahl von elektronischen Vorrichtungen und eine Vielzahl von Leistungsquellen (2) für die elektrische Leistungsversorgung der elektronischen Vorrichtungen, wobei die elektronischen Vorrichtungen jeweils eine Vielzahl von Leistungsversorgungseinheiten umfassen, die elektrische Energie von mindestens einer der Leistungsquellen (2) erhalten, wobei die elektronischen Vorrichtungen und die Leistungsquellen einem System (3) zugewiesen sind, das erste Verbindungen (4) von einer Computerstation (11) zur Datenzentrumverwaltung zu den elektronischen Vorrichtungen und zweite Verbindungen (5) von der Computerstation zu den Leistungsquellen bereitstellt, und wobei eine Infrastruktur des Datenzentrums, beinhaltend die Informationen, welche Leistungsversorgungseinheit (12) mit welchem Auslass (21) der Leistungsquellen verbunden ist, für ein Datenzentrumverwaltungswerkzeug verfügbar ist, indem es auf Datendateien einer Datenzentrumverwaltung zugreift,
wobei das Verfahren die folgenden Schritte umfasst:
- (a) Verwenden der Informationen zum Senden von Signalen über die zweiten Verbindungen (5), um einen Schaltstatus der Leistungsquellen herzustellen, wobei nur die zu prüfende Leistungsversorgungseinheit (12) elektrische Energie von der jeweiligen Leistungsquelle (2) erhält, wobei der Schaltstatus gemäß Schritt (a) hergestellt wird, indem jeglicher einer Vielzahl von Auslässen (21) der einen oder mehreren Leistungsquellen (2), die elektrische Energie an die elektronische Vorrichtung (1) bereitstellen, ausgeschaltet wird, mit der Ausnahme, dass der eine Auslass, der mit der zu prüfenden Leistungsversorgungseinheit (12) verbunden ist, eingeschaltet wird oder eingeschaltet bleibt, und
- (b) Senden und Empfangen von Signalen über die ersten Verbindungen (4) zu der elektronischen Vorrichtung, umfassend die zu prüfende Leistungsversorgungseinheit (12), um zu ermitteln, ob die elektronische Vorrichtung (1) reagiert oder nicht, während der Schaltstatus gemäß Schritt (a) besteht, wobei eine reagierende elektronische Vorrichtung eine betriebsfähige zu prüfende Leistungsversorgungseinheit (12) anzeigt, und
wobei die Vielzahl von Leistungsversorgungseinheiten (12) der elektronischen Vorrichtung (1) nachfolgend geprüft werden, indem die Schritte (a) und (b) für jede Leistungsversorgungseinheit wiederholt werden.

2. Verfahren nach Anspruch 1, wobei Schritt (b) weiter beinhaltet, die elektronische Vorrichtung (1) so zu steuern, dass ein Leistungsverbrauch der elektronischen Vorrichtung steigt.

3. Verfahren nach Anspruch 2, wobei eine Robustheit der Leistungsversorgungseinheit (12) für eine Spanne des Leistungsverbrauchs der elektronischen Vorrichtung (1) geprüft wird.

4. Verfahren nach einem der vorstehenden Ansprüche, wobei Schritt (b) weiter beinhaltet, die Leistungsversorgungseinheit (12) mittels eines Integritätstesters zu prüfen, um eine Analyse einer Betriebsstabilität der Leistungsversorgungseinheit durchzuführen.

5. Verfahren nach einem der vorstehenden Ansprüche, wobei die Ausführung des Funktionstests so geplant wird, dass eine Interferenz mit einer Hauptaufgabe der elektronischen Vorrichtung (1) vermieden wird.

6. Verfahren nach Anspruch 5, weiter umfassend einen Anfangsschritt (100), wobei jeglicher der Vielzahl von Auslässen (21) der einen oder mehreren Leistungsquellen (2), die elektrische Energie an die elektronische Vorrichtung (1) bereitstellen, eingeschaltet wird, wobei der Anfangsschritt (100) vor jeder Ausführung (110, 210, 310) von Schritt (a) ausgeführt wird.

7. Datenzentrumverwaltungswerkzeug zum Verwalten einer Vielzahl von Leistungsquellen (2) für leistungsverbrauchende elektronische Vorrichtungen (1) eines Datenzentrums (9), wobei jede elektronische Vorrichtung mindestens eine Leistungsversorgungseinheit (12) umfasst, um elektrische Energie von den Leistungsquellen zu erhalten und die elektronische Vorrichtung mit der elektrischen Energie zu versorgen, wobei die Leistungsquellen und die elektronischen Vorrichtungen einem System (3) zugewiesen sind, wobei das Datenzentrumverwaltungswerkzeug angepasst ist, eine Funktionsprüfung mindestens einer der Leistungsversorgungseinheit (12) unter Verwendung des Verfahrens nach einem der vorstehenden Ansprüche auszuführen.

8. Datenzentrumverwaltungswerkzeug nach Anspruch 7, wobei das Datenzentrumverwaltungswerkzeug eine Softwareanwendung umfasst, die auf einer elektronischen Vorrichtung (1) läuft, die dem System (3) zugewiesen ist.

9. Datenzentrumverwaltungswerkzeug nach Anspruch 8, wobei das Datenzentrumverwaltungswerkzeug die elektronische Vorrichtung (1) umfasst, wobei die elektronische Vorrichtung eine Computerstation (11) ist, auf der die Softwareanwendung läuft.

## Revendications

1. Procédé d'exécution d'une vérification fonctionnelle sur une unité d'alimentation électrique (12) d'un dispositif électronique (1) dans un centre de données (9) comprenant une pluralité de dispositifs électroniques et une pluralité de sources d'énergie (2) pour l'alimentation électrique des dispositifs électroniques, les dispositifs électroniques comprenant chacun une pluralité d'unités d'alimentation électrique obtenant de l'énergie électrique d'au moins une des sources d'énergie (2), dans lequel les dispositifs électroniques et les sources d'énergie sont attribués à un système (3) fournissant des premières connexions (4) depuis une station informatique (11) pour une gestion de centre de données aux dispositifs électroniques et des secondes connexions (5) depuis la station informatique aux sources d'énergie, et dans lequel une infrastructure du centre de données, incluant les informations, laquelle unité d'alimentation électrique (12) est connectée à la sortie (21) des sources d'énergie qui est disponible pour un outil de gestion de centre de données en accédant à des fichiers de données d'une gestion de centre de données,
le procédé comprenant les étapes suivantes consistant à :
- (a) utiliser lesdites informations pour envoyer des signaux sur les secondes connexions (5) pour établir un statut de commutation des sources d'énergie, dans lequel uniquement l'unité d'alimentation électrique (12) à vérifier obtient de l'énergie électrique de la source d'énergie respective (2), dans lequel le statut de commutation selon l'étape (a) est établi en éteignant l'une quelconque d'une pluralité de sorties (21) des une ou plusieurs sources d'énergie (2) fournissant de l'énergie électrique au dispositif électronique (1), à l'exception que la une sortie connectée à l'unité d'alimentation électrique (12) à vérifier soit allumée ou maintenue allumée, et
- (b) envoyer et recevoir des signaux sur les premières connexions (4) au dispositif électronique comprenant l'unité d'alimentation électrique (12) à vérifier pour demander si ledit dispositif électronique (1) est réactif ou non tandis que le statut de commutation selon l'étape (a) persiste, dans lequel un dispositif électronique réactif indique une unité d'alimentation électrique exploitable (12) à vérifier, et
dans lequel la pluralité d'unités d'alimentation électrique (12) du dispositif électronique (1) sont ensuite vérifiées en répétant les étapes (a) et (b) pour chaque unité d'alimentation électrique.

2. Procédé selon la revendication 1, dans lequel l'étape (b) inclut en outre le fait de commander le dispositif électronique (1) de sorte qu'une consommation électrique du dispositif électronique augmente.

3. Procédé selon la revendication 2, dans lequel une robustesse de l'unité d'alimentation électrique (12) est vérifiée pour une plage de la consommation électrique du dispositif électronique (1).

4. Procédé selon l'une quelconque des revendications précédentes, dans lequel l'étape (b) inclut en outre le fait de vérifier l'unité d'alimentation électrique (12) au moyen d'un dispositif de test d'intégrité pour effectuer une analyse d'une stabilité opérationnelle de l'unité d'alimentation électrique.

5. Procédé selon l'une quelconque des revendications précédentes, dans lequel l'exécution du test fonctionnel est programmée de telle sorte qu'une interférence avec une tâche majeure du dispositif électronique (1) est évitée.

6. Procédé selon la revendication 5, comprenant en outre une étape initiale (100), dans lequel l'une quelconque de pluralité de sorties (21) des une ou plusieurs sources d'énergie (2), qui fournissent de l'énergie électrique au dispositif électronique (1), est allumée, l'étape initiale (100) étant exécutée avant chaque exécution (110, 210, 310) de l'étape (a).

7. Outil de gestion de centre de données pour gérer une pluralité de sources d'énergie (2) pour des dispositifs électroniques consommant de l'énergie (1) d'un centre de données (9), chaque dispositif électronique comprenant au moins une unité d'alimentation électrique (12) pour obtenir de l'énergie électrique des sources d'énergie et pour fournir de l'énergie électrique au dispositif électronique, les sources d'énergie et les dispositifs électroniques étant attribués à un système (3), dans lequel l'outil de gestion de centre de données est adapté pour exécuter une vérification fonctionnelle d'au moins une de l'unité d'alimentation électrique (12) en utilisant le procédé selon l'une des revendications précédentes.

8. Outil de gestion de centre de données selon la revendication 7, dans lequel l'outil de gestion de centre de données comprend une application logicielle s'exécutant sur un dispositif électronique (1) attribué au système (3).

9. Outil de gestion de centre de données selon la revendication 8, dans lequel l'outil de gestion de centre de données comprend le dispositif électronique (1), le dispositif électronique étant une station informatique (11) exécutant l'application logicielle.
